# EUROPÄISCHE PATENTANMELDUNG

(11) **EP 1 310 723 A2**
(43) Veröffentlichungstag der Anmeldung: **14.05.2003**
(21) Anmeldenummer: 02024387.9
(22) Anmeldetag: 04.11.2002
(51) Int. Cl.: F16L 37/40, F16L 37/32

(54) **Ventil mit umlaufender Axialdichtung**

(30) Priorität: 08.11.2001 DE 10154808
(71) Anmelder: F.A. SENING GMBH, 25474 Ellerbek (DE)
(72) Erfinder: Steffen, Ulf, 20253 Hamburg (DE); Stührwoldt, Michael, 22967 Tremsbüttel (DE)
(74) Vertreter: Meyer, Ludgerus A.

(57) **Zusammenfassung**

Die Erfindung betrifft ein Ventil, insbesondere für eine Vollschlauchkuppelung, mit einem Gehäuse 2, einem Ventilschaft 6 und einem mit einem umlaufenden, rückwärtigen Vorsprung 32 versehenen Ventilkegel 8, bei dem der Vorsprung 32 des Ventilkegels 8 bei geschlossenem Ventil auf einem ringförmigen Absatz 34 des Gehäuses 2 aufliegt und eine ringförmige Axialdichtung 20 zwischen dem Ventilkegel 8 und dem Absatz 34 des Gehäuses 2 vorgesehen ist, wobei bei geschlossenen Ventil die Vorderseite 12 des Ventilkegels 8 bündig mit einer Normkante 14 des Gehäuses 2 abschließt. Ein Hauptkörper 22 der Dichtung 20 ist in einer ringförmigen Nut 18 des Ventilkegels 8 aufgenommen und ein Dichtungsabschnitt 26 der Dichtung 20 liegt bei geschlossenem Ventil auf dem Absatz 34 des Gehäuses 2 auf, wobei der Vorsprung 32 des Ventilkegels 8 den Dichtungsabschnitt 26 der Dichtung 20 in radialer und axialer Richtung umgreift.

## Beschreibung

Die Erfindung betrifft ein Ventil mit Axialdichtung nach dem Oberbegriff des Anspruchs 1.

Aus der DE 42 36 858 ist ein gattungsgemäßes Ventil für eine Vollschlauchkuppelung bekannt, das beim Befüllen von Tankwagen mit Kraftstoffen verwendet wird. Das Ventil besteht aus einem Gehäuse, in dem ein Ventilkegel an einem Ventilschaft verschiebbar befestigt ist. Der Ventilkegel wird in seiner Ruhestellung von einer Feder in eine Position gedrückt, in der das Ventil verschlossen ist. Nach dem Ankuppeln eines Vollschlauches wird durch einen Stift der Kuppelung des Vollschlauchs der Ventilkegel in das Innere des Gehäuses geschoben, so dass das Ventil geöffnet ist.

Wichtig hierbei ist, dass bei geschlossenem Ventil dessen Totvolumen so klein wie möglich gehalten wird, da nicht verhindert werden kann, dass Kraftstoffreste, die sich in dem Totvolumen angesammelt haben, nach dem Abkoppeln des Vollschlauch in die Umwelt gelangen können und so zu einer erhöhten Umweltbelastungen führen.

Hierzu weist der Ventilkegel einen umlaufenden, rückwärtigen Vorsprung auf, der bei geschlossenem Ventil auf einem Absatz des Gehäuses flächig aufliegt und durch eine Feder an das Gehäuse gedrückt wird. Die Normkante des Gehäuses schließt dabei bündig mit der Vorderseite des Ventilkegels ab, so dass das Totvolumen minimiert ist. Zwischen dem Vorsprung des Ventilkegels und dem Absatz des Gehäuses ist eine Dichtung vorgesehen, die aus einer umlaufenden Nut ragt und bei geschlossenem Ventil nur teilweise mit dem Ventilkegel in Kontakt kommt. Da Additive von Kraftstoffen ein Aufquellen der Dichtung bewirken können, ist die im Gehäuseabsatz eingebrachte Nut so bemessen, dass die Dichtung sich dehnen kann.

Es ist Aufgabe der Erfindung, ein verbessertes Ventil bereitzustellen, dass ein möglichst geringes Totvolumen aufweist und auch bei einer aufquellenden Dichtung sicher und zuverlässig funktioniert.

Die Aufgabe wird durch die im Anspruch 1 angegebene Erfindung gelöst. Bevorzugte Ausführungsformen der Erfindung sind in den Unteransprüchen angegeben.

Das gattungsgemäße Ventil nach dem Oberbegriff des Anspruchs 1 ist nach der Erfindung dadurch gekennzeichnet, dass ein Hauptkörper der Dichtung in einer ringförmigen Nut des Ventilkegels aufgenommen ist und ein Dichtungsabschnitt der Dichtung bei geschlossenem Ventil auf dem Absatz des Gehäuses aufliegt, wobei der Vorsprung des Ventilkegels den Dichtungsabschnitt der Dichtung in radialer und axialer Richtung umgreift.

Durch diese Maßnahme wird erreicht, dass das Aufquellen der Dichtung bei Kontakt mit Kraftstoffadditiven begrenzt wird und somit auch in diesem Fall ein zuverlässiges Funktionieren des Ventils gewährleistet wird. Außerdem wird das Ventil durch die Dichtung und zusätzlich durch den auf dem Gehäuseabsatz aufliegenden Vorsprung verschlossen, wobei der aufliegende Vorsprung die ringförmige Dichtung in einem konzentrischen Kreis umschließt, ohne bei geschlossenen Ventil die Dichtung auf den Gehäuseabsatz zu pressen, so dass die Dichtigkeit des geschlossenen Ventils auch bei gequollener Dichtung verbessert ist.

Ein weiterer Vorteil der erfindungsgemäßen Ventile liegt darin, dass das Ventil sich ca. um 1,5 mm öffnen lässt, ohne dass das Produkt ausfließt.

Vorzugsweise ist vorgesehen, dass der Ventilkegel mehrteilig mit einer Basisplatte und dem lösbar daran befestigten Abdeckring mit ringförmigen Vorsprung des Ventilkegels ausgebildet ist. Dies vereinfacht insbesondere die Fertigung des Ventils und erleichtert während der Montage des Ventils das Einsetzen der Dichtung.

In einer weiteren, bevorzugen Ausführung ist die Nut an der Rückseite der Basisplatte ausgebildet. Auch dies vereinfacht die Fertigung und spätere Montage des Ventils.

Vorzugsweise ist vorgesehen, dass eine Federscheibe zwischen dem Ventilkegel und dem Abdeckring mit ringförmigen Vorsprung gehalten ist und dass der Hauptkörper der Dichtung in der Nut zwischen Ventilkegel und Federscheibe geklemmt ist, wobei in geschlossenen Zustand des Ventils die Rückseite des Dichtungsabschnitts der Dichtung von dem Außenrand der Federscheibe gegen den Absatz des Gehäuse gedrückt wird. Durch die Federscheibe wird der Anpressdruck der Dichtung erhöht und kann der jeweiligen Anwendung entsprechend angepasst werden, ohne das die Form oder das Material der Dichtung verändert werden muss. Außerdem wird die Befestigung des Hauptkörpers der Dichtung sowie die Montage des Ventils vereinfacht.

In einer bevorzugen Ausführung ist der Dichtungsabschnitt der Dichtung mit einer angeschnittenen Lippe ausgebildet, um so die Dichtigkeit des geschlossenen Ventils zu verbessern.

In einer weiteren bevorzugen Ausführung weist der Vorsprung Öffnungen auf, durch die bei geschlossenem Ventil Flüssigkeitsdruck im Inneren des Gehäuses auf die Dichtung übertragbar ist, um so den Anpressdruck der Dichtung zu erhöhen.

Vorzugsweise ist vorgesehen, dass die Dichtung aus Viton gefertigt ist, um ein durch Kraftstoffadditive hervorgerufenes Aufquellen der Dichtung zu minimieren.

In einer bevorzugen Ausführung ist vorgesehen, dass der Federring aus dünnen Metall gefertigt ist.

Im folgenden wird die Erfindung anhand einer Zeichnung erläutert, in der
- Fig. 1: eine schematische Schnittdarstellung des erfindungsgemäßen Ventils zeigt, wobei in der rechten Hälfte der Darstellung das Ventil geschlossen ist und in der linken Hälfte sich der Ventilkegel in einer Zwischenposition befindet,
- Fig. 2: einen vergrößerten Ausschnitt der Fig. 1 zeigt und
- Fig. 3: die ringförmige Dichtung im Querschnitt zeigt.

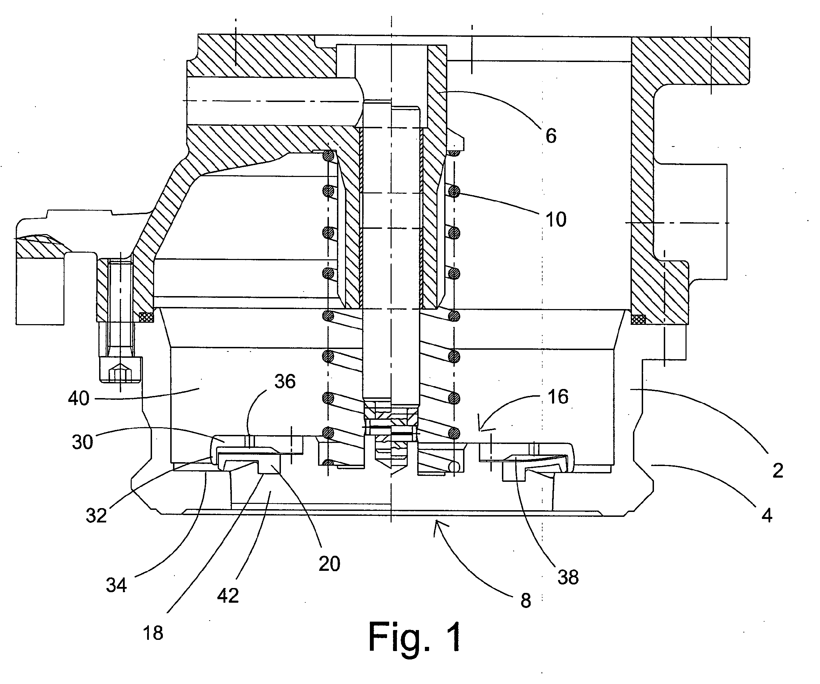

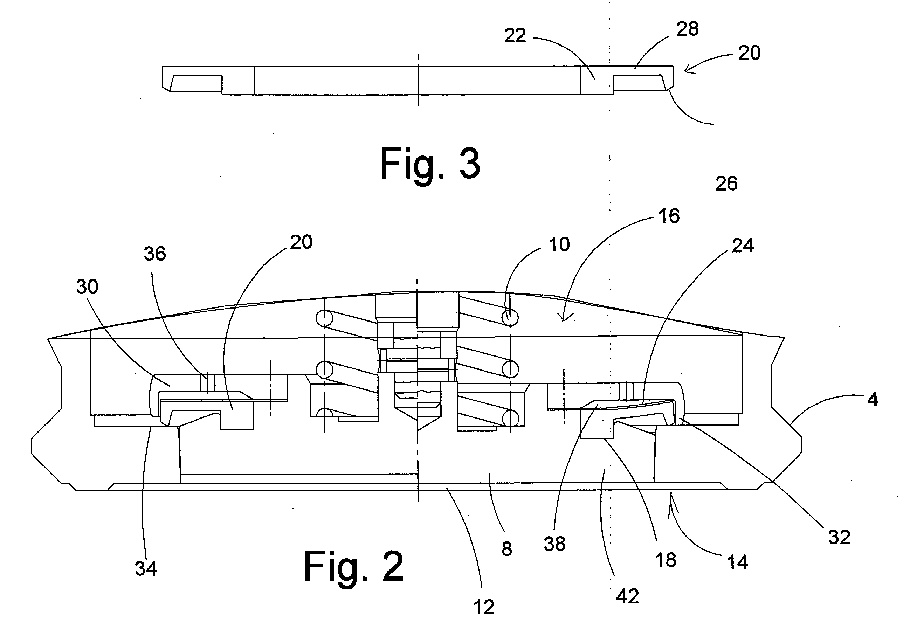

Es wird zuerst auf die Fig. 1 und 2 Bezug genommen. Das erfindungsgemäße Ventil besteht aus einem im wesentlichen zylinderförmigen Gehäuse 2 mit einer Kuppeleinrichtung 4, an die ein Vollschlauch angekuppelt werden kann. In dem Gehäuse 2 ist an einem Ventilschaft 6 ein kreisförmiger Ventilkegel 8 verschiebbar befestigt. Durch eine Feder 10 wird der Ventilkegel 8 in eine Position im Gehäuse 2 gedrückt, bei der das Ventil verschlossen ist. In dieser geschlossenen Position (rechte Hälfte der Fig. 1 und 2) ruht ein Vorsprung 32 des Ventilkegels 8 auf einem ringförmig umlaufenden Absatz 34 des Gehäuses 2, wobei eine Dichtung 20 vorgesehen ist, die mit dem Absatz 34 des Gehäuses 2 in Kontakt steht und das Ventil sicher verschließt.

Der Ventilkegel 8 besteht aus einer Basisplatte 42 und einem, z.B. durch Schrauben, daran befestigten Abdeckring 30 mit Vorsprung 32. In die Rückseite 16 der Basisplatte 42 ist eine umlaufende Nut 18 eingebracht, in die die sich radial über den Rand der Basisplatte 42 erstreckende Dichtung 20 eingesetzt ist.

Die Dichtung 20 ist im Schnitt in Fig. 3 dargestellt. Die ringförmige Dichtung 20 ist aus Viton gefertigt und weist an der Innenseite einen Hauptkörper 22 auf, der in die Nut 18 eingesetzt wird. An der Außenseite der Dichtung 20 befindet sich ein Dichtungsabschnitt 26, der als angeschnittene Lippe ausgebildet ist. Zwischen dem Hauptkörper 22 und dem Dichtungsabschnitt 26 ist ein Schwächungsabschnitt 28 vorgesehen, der den Dichtungsabschnitt 26 und den Hauptkörper 22 elastisch verbindet.

Es wird nun wieder auf die Fig. 1 und 2 Bezug genommen. Zwischen die Basisplatte 42 und den Abdeckring 30 ist eine Federscheibe 24 eingesetzt, die aus Metall gefertigt ist und eine Dicke von ca. 0,25 mm aufweist. Die Federscheibe 24 unterstützt den federnden Schwächungsabschnitt 28 der Dichtung 20 und verstärkt so den Anpressdruck des Dichtungsabschnitts 26, wenn das Ventil geschlossen ist.

Die Abdeckring 30 mit Vorsprung 32 kann auch ein Innengewinde aufweisen, mit dem er mit einem entsprechenden Außengewinde der Basisplatte 42 verschraubt werden kann. Die Federscheibe 24 ist zwischen der Basisplatte 42 und dem Abdeckring 30 mit Vorsprung 32 eingeklemmt und steht immer in Kontakt mit der Dichtung 20, wobei bei geschlossenem Ventil die Federscheibe 24 zusammen mit der Dichtung 20 ausgelenkt bzw. verformt wird.

Der Vorsprung 32 ist so dimensioniert, dass er sich in radialer Richtung über die Basisplatte 42 und über den Dichtungsabschnitt 26 der Dichtung 20 erstreckt und bei geschlossenem Ventil auf dem Absatz 34 des Gehäuses 2 ruht. Dabei ist der Vorsprung 32 so gestaltet, dass die Dichtung 20 und die Federscheibe 24 in radialer und axialer Richtung umgriffen werden, so dass eine Verformung der Dichtung 20 in radialer Richtung durch den Vorsprung 32 verhindert wird. Außerdem ist die Abdeckplatte 30 mit Vorsprung 32 so gestaltet, dass nach der Montage des Ventils eine Kammer 38 oberhalb der Federscheibe 24 verbleibt. Der Abdeckring 30 ist mit Öffnungen 36 versehen, die die Kammer 38 oberhalb der Federscheibe 24 mit dem Innenraum 40 des Gehäuses 2 verbinden, so dass der Flüssigkeitsdruck im Innenraum 40 auch auf die Federscheibe 24 und die Dichtung 20 drückt und so die Abdichtung zwischen dem Dichtungsabschnitt 26 und dem Absatz 34 erhöht.

Nachdem ein Volischlauch an die Kuppelungseinrichtung 4 angeschlossen wurde, wird durch einen Stift der Ventilkegel 8 zurückgedrängt und so das Ventil geöffnet. Wenn der Tankvorgang abgeschlossen ist, wird der Stift wieder zurückgezogen und anschließend der Vollschlauch wieder abgekuppelt.

Während der Stift sich zurückbewegt, wird durch die Feder 10 sichergestellt, dass der Ventilkegel 8 von der geöffneten Position in die geschlossene Position zurückgedrängt wird. Bevor der Ventilkegel 8 von der geöffneten Position kommend die geschlossene Position erreicht, durchläuft er eine Zwischenposition (siehe Fig. 1 und 2, linke Hälfte), in der der Dichtungsabschnitt 26 der Dichtung 20 mit dem Absatz 34 des Gehäuses 2 in Kontakt tritt und einen Verschluss des Ventils bewirkt.

Während der Ventilkegel 8 weiter in Richtung auf die geschlossene Position verschoben wird, wird die Dichtung 20 weiter an den Absatz 34 gedrückt und der Schwächungsabschnitt 28 und die Federscheibe 24 ausgelenkt, so dass jetzt der Dichtungsabschnitt 26 auch mit der Federkraft des Schwächungsabschnitts 28 und der Federscheibe 24 auf den Absatz 34 gedrückt wird. Die geschlossene Position des Ventilkegels 8 ist erreicht, wenn der Vorsprung 32 in Kontakt mit dem Absatz 34 des Gehäuses 2 tritt und so eine weitere Bewegung des Ventilkegels 8 stoppt. In dieser Position schließt die Vorderseite 12 des Ventilkegels 8 mit der Normkante 14 des Gehäuses 2 bündig ab, so dass das Totvolumen des Ventils minimiert ist.

### Bezugzeichenliste

- 2: Gehäuse
- 4: Kuppelungseinrichtung
- 6: Ventilschaft
- 8: Ventilkegel
- 10: Feder
- 12: Vorderseite der Basisplatte
- 14: Normkante
- 16: Rückseite der Basisplatte
- 18: Nut
- 20: Dichtung
- 22: Hauptkörper
- 24: Federscheibe
- 26: Dichtungsabschnitt
- 28: Schwächungsabschnitt
- 30: Abdeckring
- 32: Vorsprung
- 34: Absatz
- 36: Öffnung
- 38: Kammer
- 40: Innenraum
- 42: Basisplatte

## Patentansprüche

1. Ventil, insbesondere für eine Vollschlauchkuppelung, mit einem Gehäuse (2), einem Ventilschaft (6) und einem mit einem umlaufenden, rückwärtigen Vorsprung (32) versehenen Ventilkegel (8), bei dem der Vorsprung (32) des Ventilkegels (8) bei geschlossenem Ventil auf einem ringförmigen Absatz (34) des Gehäuses (2) aufliegt und eine ringförmige Axialdichtung (20) zwischen dem Ventilkegel (8) und dem Absatz (34) des Gehäuses (2) vorgesehen ist, wobei bei geschlossenen Ventil die Vorderseite (12) des Ventilkegels (8) bündig mit einer Normkante (14) des Gehäuses (2) abschließt, **dadurch gekennzeichnet, dass** ein Hauptkörper (22) der Dichtung (20) in einer ringförmigen Nut (18) des Ventilkegels (8) aufgenommen ist und ein Dichtungsabschnitt (26) der Dichtung (20) bei geschlossenem Ventil auf dem Absatz (34) des Gehäuses (2) aufliegt, wobei der Vorsprung (32) des Ventilkegels (8) den Dichtungsabschnitt (26) der Dichtung (20) in radialer und axialer Richtung umgreift.

2. Ventil nach Anspruch 1, **dadurch gekennzeichnet, dass** der Ventilkegel (8) mehrteilig mit einer Basisplatte (42) und dem lösbar daran befestigten Abdeckring (30) mit ringförmigen Vorsprung (32) des Ventilkegels (8) ausgebildet ist.

3. Ventil nach Anspruch 2, **dadurch gekennzeichnet, dass** die Nut (18) an der Rückseite (16) der Basisplatte (42) ausgebildet ist.

4. Ventil nach Anspruch 2 oder 3, **dadurch gekennzeichnet, dass** eine Federscheibe (24) zwischen dem Ventilkegel (8) und dem ringförmigen Abdeckring (30) mit Vorsprung (32) gehalten ist und dass der Hauptkörper (22) der Dichtung (20) in der Nut (18) zwischen Ventilkegel (8) und Federscheibe (24) geklemmt ist, wobei in geschlossenen Zustand des Ventils die Rückseite des Dichtungsabschnitts (26) der Dichtung (20) von dem Außenrand der Federscheibe (24) gegen den Absatz (34) des Gehäuses (2) gedrückt wird.

5. Ventil nach einem der vorherigen Ansprüche, **dadurch gekennzeichnet, dass** der Dichtungsabschnitt (26) der Dichtung (20) mit einer angeschnittenen Lippe ausgebildet ist.

6. Ventil nach einem der vorherigen Ansprüche, **dadurch gekennzeichnet, dass** der Abdeckring (30) mit Vorsprung (32) Öffnungen (34) aufweist, durch die bei geschlossenem Ventil Flüssigkeitsdruck im Inneren des Gehäuses (2) auf die Dichtung (20) übertragbar ist.

7. Ventil nach einem der vorherigen Ansprüche, **dadurch gekennzeichnet, dass** die Dichtung (20) aus Viton gefertigt ist.

8. Ventil nach einem der vorherigen Ansprüche, **dadurch gekennzeichnet, dass** der Federscheibe (24) aus Metall gefertigt ist.
